# EUROPEAN PATENT APPLICATION

(11) **EP 2 728 933 A1**
(43) Date of publication of application: **07.05.2014**
(21) Application number: 11868718.5
(22) Date of filing: 28.06.2011
(51) Int. Cl.: H04W 36/08, H04W 80/04

(54) **COMMUNICATION CONTROL METHOD AND HOME BASE STATION**

(71) Applicant: Kyocera Corporation, Kyoto-shi Kyoto 612-8501 (JP)
(72) Inventor: ADACHI, Hiroyuki, Kyoto-shi, Kyoto 612-8501 (JP)
(74) Representative: Schwabe - Sandmair - Marx
(86) International application number: PCT/JP2011/064838
(87) International publication number: WO 2013/001610

(57) **Abstract**

A home base station (HeNB) that supports LIPA (Local Internet Protocol Access) defined in the 3GPP (3rd Generation Partnership Project) standards: confirms (step S102) whether or not a target base station supports the LIPA before a handover procedure from the home base station to the target base station is started for a user terminal (UE) having an LIPA connection; and transmits 8step S103) a handover request to the target base station without releasing the LIPA connection when the target base station supports the LIPA.

## Description

### Technical Field

The present invention relates to a communication control method and a home base station in a mobile communication system.

### Background Art

In 3GPP (3rd Generation Partnership Project) which is a project aiming to standardize a mobile communication system, the standardization of LTE Advanced, which is a sophisticated version of LTE (Long Term Evolution), is conducted after 3GPP Release 10.

In the 3GPP Release 10, an LIPA (Local Internet Protocol Access) function by a home base station is defined (see NPLs 1 and 2). The home base station is a small-sized base station provided in a house or in a company and may be called a femto cell base station.

LIPA is a function of performing communication by an LIPA connection (LIPA PDN connection) which is established between a user terminal and a local device within an IP network of the house (or company) where the user terminal is located, via a home base station and not via a core network of an operator. The LIPA does not feed user data to the core network, and thus, it is possible to reduce a traffic load of the core network.

The 3GPP Release 10 does not support a mobility of the LIPA connection. Therefore, when a user terminal having the LIPA connection moves from a home base station to another base station, the connection is always released. As a result, when resuming communication between the user terminal and the local device to which the user terminal had been connected, a reconnection process is needed, and thus, the communication is interrupted.

### Citation List

### Non Patent Literature

[NPL 1] 3GPP Technical Specification TS 23.401 V10.3.0, "4.3.16 Local IP Access (LIPA) function"
[NPL 2] 3GPP Technical Specification TS 36.300 V10.3.0, "4.6.5 Support of LIPA with HeNB"

### Summary of the Invention

Release 11, of which the specification will be developed in the future following the 3GPP Release 10, is expected to support the mobility of the LIPA connection between the home base stations that support the LIPA, that is, enable handover while maintaining the LIPA connection.

However, the current specification defines that when the user terminal having the LIPA connection moves from the home base station to another base station, the LIPA connection is always released, and thus, there is a problem that it is not possible to support the mobility of the LIPA connection.

Therefore, it is an object of the present invention to provide a communication control method capable of supporting a mobility of an LIPA connection and to provide a home base station thereof.

The feature of a communication control method according to the present invention is summarized as follows. A communication control method in a home base station (HeNB 200) that supports LIPA (Local Internet Protocol Access) defined in the 3GPP (3rd Generation Partnership Project) standards, comprises: a step (step S102) of confirming whether or not a target base station supports the LIPA before a handover procedure from the home base station to the target base station is started for a user terminal (UE 100) having an LIPA connection; and a step (step S103) of transmitting a handover request to the target base station without releasing the LIPA connection when the target base station supports the LIPA.

The feature of a home base station according to the present invention is summarized as follows. A home base station that supports LIPA (Local Internet Protocol Access) defined in the 3GPP (3rd Generation Partnership Project) standards, is configured to: confirm whether or not a target base station supports the LIPA before a handover procedure from the home base station to the target base station is started for a user terminal having an LIPA connection; and transmit a handover request to the target base station without releasing the LIPA connection when the target base station supports the LIPA.

### Brief Description of the Drawings

[Fig. 1] Fig. 1 is a diagram showing an entire configuration of a mobile communication system according to the embodiment of the present invention.
[Fig. 2] Fig. 2 is a block diagram of the user equipment according to the embodiment of the present invention.
[Fig. 3] Fig. 3 is a block diagram of the home base station according to the embodiment of the present invention.
[Fig. 4] Fig. 4 is a diagram for describing operation of the home base station according to the embodiment of the present invention.
[Fig. 5] Fig. 5 is an operation flowchart of the home base station according to the embodiment of the present invention.
[Fig. 6] Fig. 6 is a configuration diagram of the mobile communication system according to the other embodiment.
[Fig. 7] Fig. 7 is an operation flow diagram of the mobile communication system according to the other embodiment.

### Description of the Embodiment

With reference to the drawings, the embodiment of the present invention will be described. In the drawings of the following embodiments, the same or similar reference signs are applied to the same or similar portions.

### (Configuration of mobile communication system)

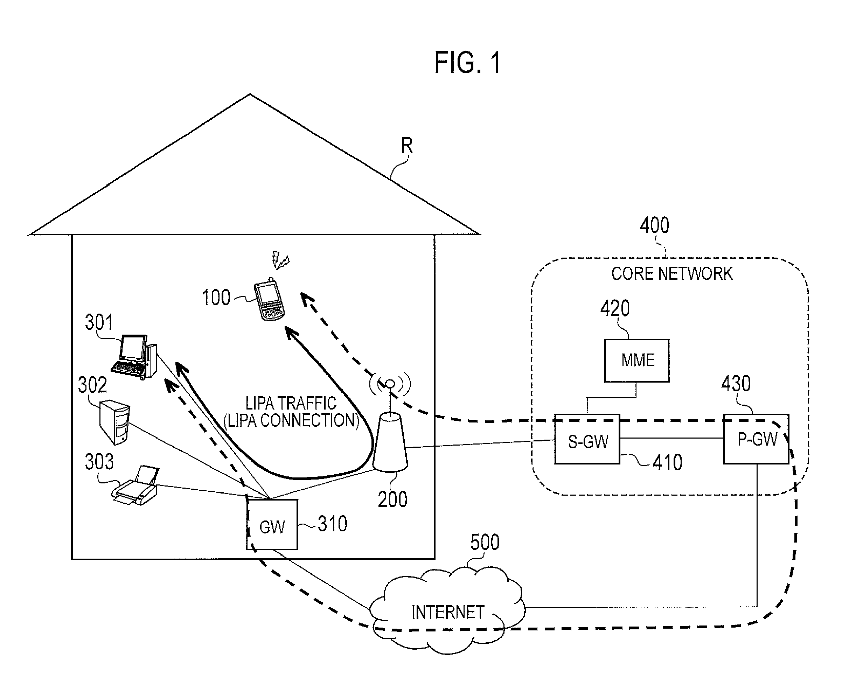

Fig. 1 is a diagram showing an entire configuration of a mobile communication system according to the present embodiment. The mobile communication system according to the present embodiment is configured on the basis of LTE-Advanced (after 3GPP Release 10) of which the specification is developed in 3GPP.

As shown in Fig. 1, the mobile communication system according to the present embodiment includes a home base station (Home evolved Node B: HeNB) 200, a user terminal (User Equipment: UE) 100, local devices (Local Entities: LEs) 301 to 303, and a gateway (GW) 310. In the present embodiment, each of the HeNB 200, the UE 100, the LEs 301 to 303, and the GW 310 is located on an IP network in the same house R.

The HeNB 200 forms a small-sized cell, and performs radio communication with the UE 100 located within the cell. The cell is a minimum unit of a radio communication area.

In the HeNB 200, a function of a local gateway (L-GW) for implementing LIPA is provided. The LIPA is a function that enables the IP-compatible UE 100 connected via the HeNB 200 to access another IP-compatible entity within an IP network of the same house/company without a user plane crossing an operator network (core network 400) other than an HeNB subsystem.

The HeNB 200 (more particularly, L-GW provided in the HeNB 200) establishes or releases the LIPA connection. A solid arrow in Fig. 1 represents user data transmitted via the LIPA connection between the UE 100 and the LE 301. Whereas, a dotted arrow in Fig. 1 represents user data transmitted via the core network 400 when the LIPA is not implemented. When the LIPA is implemented, the user data will be transmitted not via the core network 400, and thus, it is possible to reduce a traffic load of the core network 400.

The UE 100 is a portable radio communication device carried by a user, and is configured to be capable of IP communication. In the present embodiment, the UE 100 includes an LIPA connection via the HeNB 200, between with the LE 301. The UE 100 communicates with the LE 301 by using the LIPA connection.

Each of the LEs 301 to 303 is a device capable of IP communication. In the present embodiment, the LE 301 is a PC (Personal Computer), the LE 302 is a server, and the LE 303 is a printer.

The GW 310 relays data transmitted and received within the IP network in the house R, and performs a protocol conversion between the IP Network within the house R and an Internet 500.

The core network 400 includes a serving gateway (S-GW) 410, a mobility management entity (MME) 420, and a PDN gateway (P-GW) 430.

The S-GW 410 is provided to correspond to a user plane, and is configured to perform transfer control on the user data.

The MME 420 is provided to correspond to a control plane, and is configured to perform various types of mobility managements on the UE 100.

A transmission path between the HeNB 200 and the S-GW 410/MME 420 is called an S1 interface. It is noted that an inter-base station transmission path between the HeNB 200 and another HeNB is called an X2 interface.

The P-GW 430 functions as an entrance from the core network 400 to the Internet 500, and an exit from the Internet 500 to the core network 400.

It is noted that although not shown in Fig. 1, an HeNB gateway (HeNB GW) that houses a plurality of HeNBs 200 may be provided between the HeNB 200 and the S-GW 410/MME 420.

### (Configuration of UE)

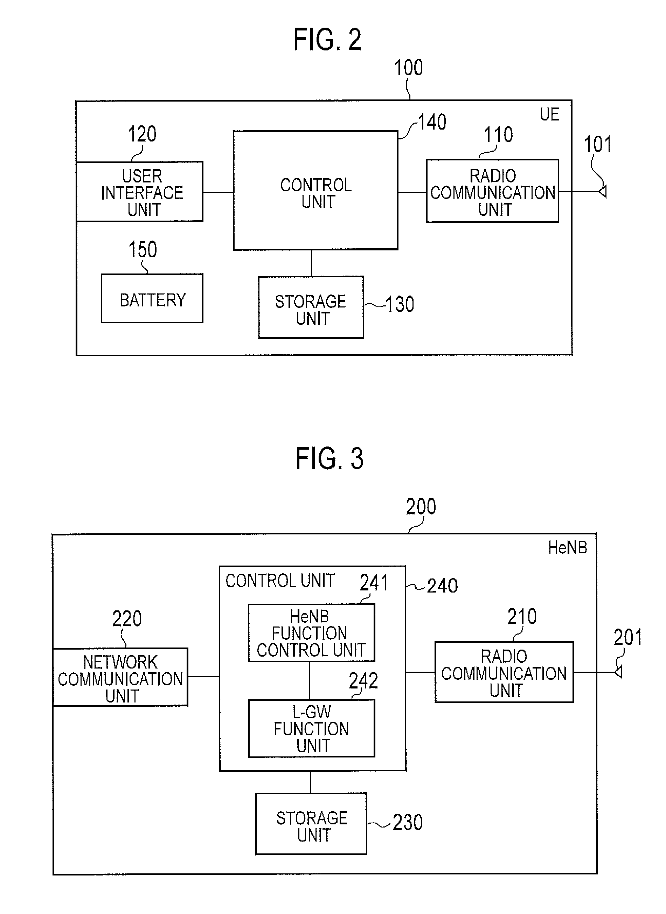

Next, the configuration of the UE 100 according to the present embodiment will be described. Fig. 2 is a block diagram of the UE 100.

As shown in Fig. 2, the UE 100 includes an antenna 101, a radio communication unit 110, a user interface unit 120, a storage unit 130, a control unit 140, and a battery 150.

The radio communication unit 110 is configured to perform radio communication via the antenna 101. For transmission, the radio communication unit 110 performs up-conversion, amplification, etc., on a baseband signal input from the control unit 140, and outputs a radio signal from the antenna 101. For reception, the radio communication unit 110 performs amplification, down-conversion, etc. on a received signal input from the antenna 101, and then outputs a baseband signal to the control unit 140.

The user interface unit 120 includes a microphone to which voice is input, a speaker that outputs voice, a display that displays an image, and a button pressed by a user, for example.

The storage unit 130 is configured by using a memory, for example, and stores various types of information used for control, for example, by the control unit 140.

The control unit 140 is configured by using a CPU, for example, and controls various types of functions provided in the UE 100.

The battery 150 stores power to be supplied to each block of the UE 100.

In the UE 100 thus configured, when the control unit 140 is in a state of being executing communication (called a connected mode), the control unit 140 measures a reception state (reference signal received power or reference signal received quality) of a reference signal received by the radio communication unit 110 for each cell, and controls so that a measurement result for each cell is reported to the serving base station.

Such a report is called measurement report. The serving base station decides whether to perform handover of the UE 100 on the basis of the measurement report. The handover is an operation that the UE 100 in a connected mode switches the serving cells. It is noted that the measurement report has two settings, i.e., a setting (Periodic) that is periodically transmitted and a setting (Event trigger) that is not transmitted until a trigger condition for permitting handover is satisfied.

### (Configuration of HeNB)

Next, the configuration of the HeNB 200 according to the present embodiment will be described. Fig. 3 is a block diagram of the HeNB 200.

As illustrated in Fig. 3, the HeNB 200 includes an antenna 201, a radio communication unit 210, a network communication unit 220, a storage unit 230, and a control unit 240.

The radio communication unit 210 is configured to perform radio communication through the antenna 201. For transmission, the radio communication unit 210, performs up-conversion, amplification, etc., on a baseband signal input from the control unit 240, and outputs a radio signal from the antenna 201. For reception, the radio communication unit 210 performs, amplification, down-conversion, etc., on a received signal input from the antenna 201, and then outputs a baseband signal to the control unit 240.

The network communication unit 220 uses the S1 interface to communicate with the S-GW 410, the MME 420, or the HeNB GW. Furthermore, the network communication unit 220 performs communication (inter-base station communication) with another HeNB by using the X2 interface. Further, the network communication unit 220 communicates with the LEs 301 to 303 via the GW 310 in the house R.

The storage unit 230 is configured by using a memory, for example, and stores various types of information used for control, for example, by the control unit 240. In the present embodiment, the storage unit 230 stores neighboring base station information in which identification information (ID) on a neighboring base station is associated with information on availability of support of LIPA (LIPA support information). For example, the neighboring base station information created by an operator or a user is stored in the storage unit 230 in advance. The LIPA support information is configured by associating a flag indicating whether or not LIPA is supported for each ID of the neighboring base station (or a cell of the neighboring base station).

The control unit 240 is configured by using a CPU, for example, and controls various functions provided in the HeNB 200. The control unit 240 includes an HeNB function control unit 241 for controlling an original function of the HeNB and an L-GW function unit 242 for implementing the function of the L-GW.

The HeNB function control unit 241 controls radio communication with the UE 100 and controls network communication using the S1 interface and the X2 interface. Further, the HeNB function control unit 241 decides whether to perform handover of the UE 100 to a target base station on the basis of the measurement report received by the radio communication unit 210 from the UE 100. The HeNB function control unit 241 starts a handover procedure when it is decided to perform handover. It is noted that the handover procedure includes a handover preparation stage, a handover execution state, and a handover completion stage.

The L-GW function unit 242 performs various types of controls for implementing the LIPA, for example, establishes or releases the LIPA connection. As described later, the L-GW function unit 242 is controlled by Intra-node Signaling from the HeNB function control unit 241.

In the HeNB 200 thus configured, the HeNB function control unit 241, before starting a handover procedure, to the target base station, of the UE 100 having an LIPA connection, confirms whether or not the target base station supports LIPA on the basis of the neighboring base station information stored in the storage unit 230.

Thus, when the target base station supports the LIPA, the HeNB function control unit 241 transmits a handover request to the target base station (HeNB in this case) without releasing the LIPA connection. In contrast, when the target base station does not support the LIPA, the HeNB function control unit 241 requests the L-GW function unit 242 to release the LIPA connection by using Intra-node Signaling.

### (Operation of HeNB)

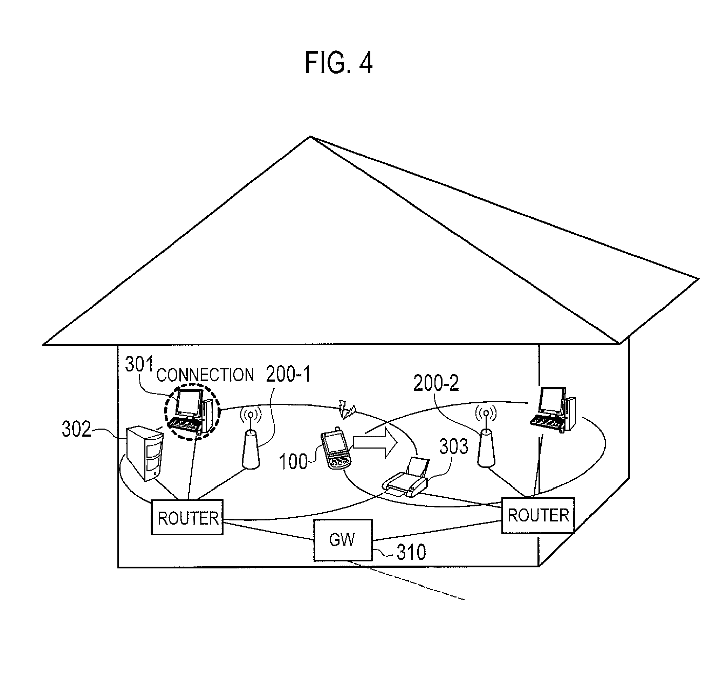

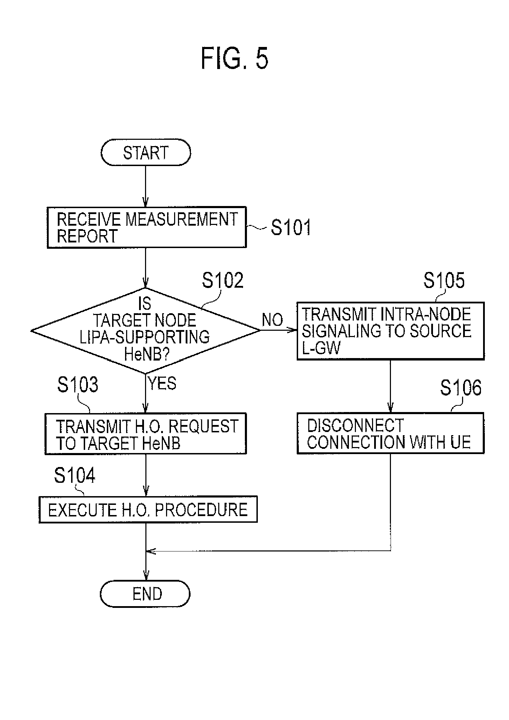

Next, by using Fig. 4 and Fig. 5, the operation of the HeNB 200 according to the present embodiment will be described.

As shown in Fig. 4, the UE 100 positioned in the communication area of HeNB 200-1 moves in the communication area of HeNB 200-2 while establishing the LIPA connection with the LE 301 via the HeNB 200-1. Hereinafter, an operation under such a situation will be described.

Fig. 5 is an operation flowchart of the HeNB 200-1.

As shown in Fig. 5, in step S101, the radio communication unit 210 receives a measurement report from the UE 100. The measurement report includes a cell ID of the HeNB 200-2 and a measurement result of the cell.

The HeNB function control unit 241 decides to start a handover procedure of the UE 100 to a target base station on the basis of the measurement report received by the radio communication unit 210.

In step S102, the HeNB function control unit 241 confirms whether or not the target base station supports the LIPA on the basis of the cell ID of the HeNB 200-2 included in the measurement report and the neighboring base station information stored in the storage unit 230. In particular, the HeNB function control unit 241 confirms whether or not the flag indicating that the LIPA is supported is associated with the cell ID of the HeNB 200-2 included in the measurement report in the neighboring base station information. When the flag indicating that the LIPA is supported is associated, the HeNB function control unit 241 advances the process to step S103. On the other hand, when the flag indicating that the LIPA is supported is not associated, the HeNB function control unit 241 advances the process to step S105.

In step S103, the HeNB function control unit 241 controls the network communication unit 220 so that the handover request is transmitted to the target base station (HeNB 200-2). In this case, the handover request is transmitted on the X2 interface when the X2 interface is present between the HeNB 200-1 and the HeNB 200-2, and transmitted on the S1 interface when the X2 interface is not present. As a result of the handover request being transmitted, the preparation stage of the handover is started.

In step S104, when the network communication unit 220 receives an acknowledgement from the target HeNB 200-2 to the handover request transmitted in step S103, the HeNB function control unit 241 transmits a handover command to the UE 100 and starts the execution stage of the handover. Then, the handover procedure is completed. Upon completion of the handover procedure, the UE 100 is capable of switching the serving cell to the target HeNB 200-2 in a state where the LIPA connection is maintained.

Meanwhile, in step S105, the HeNB function control unit 241 uses Intra-node Signaling to request the L-GW function unit 242 to release the LIPA connection. The L-GW function unit 242 releases the LIPA connection in response to the request from the HeNB function control unit 241.

In step S106, the HeNB function control unit 241 disconnects the connection between the source HeNB 200-1 and the UE 100. As a result, the UE 100 performs reconnection with the LE 301 via the target HeNB 200-2.

### (Effect of the embodiment)

As described above, the HeNB 200 confirms whether or not the target base station supports LIPA before starting the handover procedure of the UE 100 having the LIPA connection from the HeNB 200 to the target base station. Then, when the target base station supports the LIPA, the HeNB 200 transmits a handover request to the target base station without releasing the LIP connection. Thus, when the target base station supports the LIPA, upon confirmation thereof, it is possible to perform handover while maintaining the LIPA connection.

### (First modification)

In the above-described embodiment, it has been described that the HeNB 200 stores the neighboring base station information in advance, however, when the neighboring base station information is managed by the upper node (for example, the MME 420 or the HeNB GW), the HeNB 200 may acquire the neighboring base station information from the upper node.

In the present modification, the HeNB 200 performs the following process between step S101 and step S102 of Fig. 5.

The HeNB 200 transmits the cell ID of the target base station included in the measurement report on the S1 interface to the upper node in order to inquire whether or not the target base station supports the LIPA.

The upper node transmits, on the S1 interface to the HeNB 200, information indicating whether or not a node corresponding to the cell ID received from the HeNB 200 supports the LIPA.

Then, the HeNB 200 executes the process in step S102 of Fig. 5 on the basis of the LIPA support information received from the upper node.

Thus, according to the present modification, the HeNB 200 need not recognize in advance whether or not the neighboring base station supports the LIPA. In addition, when the LIPA support information from the upper node is stored, thereafter inquiry of the upper node about the target base station can be omitted.

### (Second modification)

In the present modification, the neighboring base station information is acquired from the target base station(the neighboring base station).

In particular, the HeNB 200 performs the following process between step S101 and step S102 of Fig. 5.

The HeNB 200 specifies the target base station on the basis of the cell ID of the target base station included in the measurement report and inquires, on the X2 interface, of the specified target base station about availability of the LIPA support.

The target base station transmits, on the X2 interface to the HeNB 200, information indicating whether or not a node of the target base station supports the LIPA in response to the inquiry from the HeNB 200.

Then, the source HeNB 200 executes the process in step S102 of Fig. 5 on the basis of the LIPA support information received from the target base station.

Thus, according to the present modification, the HeNB 200 need not recognize in advance whether or not the neighboring base station supports the LIPA. In addition, when the LIPA support information acquired from the target base station is stored, thereafter inquiry of the target base station can be omitted.

### (Third modification)

In the present modification, the neighboring base station information is acquired from the measurement report from the UE 100.

In the present modification, the radio communication unit 210 of the HeNB 200 transmits, on a broadcast channel, information on availability of the LIPA support. For example, information on availability of the LIPA support may be included in SIB (System Information Block).

The control unit 140 of the UE 100 not only measures a reception state of a reference signal received by the radio communication unit 110 but also acquires the LIPA support information transmitted on the broadcast channel. Then, the control unit 140 transmits the LIPA support information, to the serving base station (the HeNB 200), by including the information in the measurement report.

When receiving the measurement report in step S101 of Fig. 5, the HeNB 200-1 acquires the LIPA support information on the target base station from the measurement report and uses the acquired LIPA support information for the process in step S102.

Thus, according to the present modification, the HeNB 200 need not recognize in advance whether or not the neighboring base station supports the LIPA.

### (Other embodiment)

As described above, the present invention was described according to the embodiment. However, it must not be understood that the discussions and drawings constituting a part of this disclosure limit the present invention. From this disclosure, various alternative embodiments, examples and operational techniques are apparent to those skilled in the art.

An access type such as "closed" in which only an access by a specific UE is permitted and "open" in which an access by another UE also is permitted, may be set to the HeNB. In the above-described embodiment, such an access type is not particularly taken into consideration; however, the handover control may be performed in further consideration of the access type. For example, when the access type is such that the target base station (target HeNB) supports the LIPA and the target base station (target HeNB) permits access by UE, the handover request may be transmitted to the target base station without releasing the LIPA connection.

In the above-described embodiment, a case is assumed that the target HeNB and the source HeNB are located within the same house (or company); however, whether or not the target HeNB is in the house (or company) where the source HeNB is located may be considered at the time of handover determination. For example, when the target base station (target HeNB) supports the LIPA and the target HeNB and the source HeNB are within the same house (or company), the handover request may be transmitted to the target base station without releasing the LIPA connection.

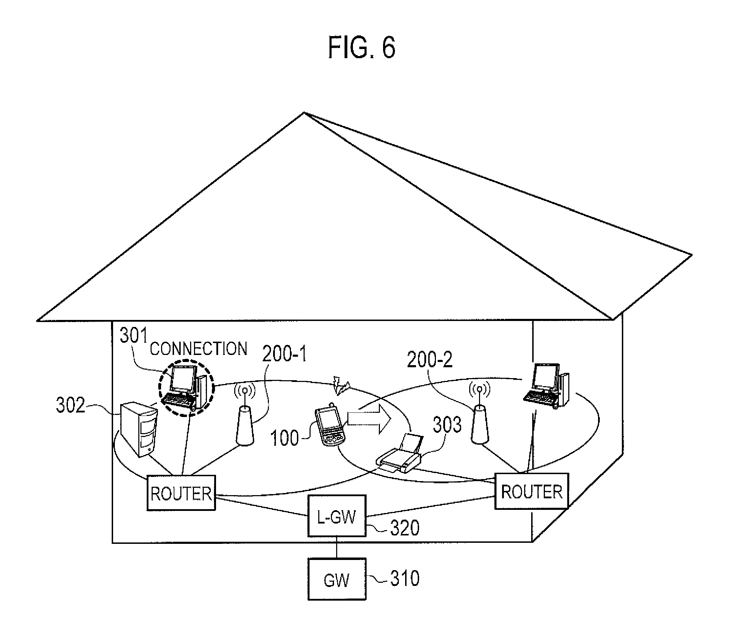

In the above-described embodiment, the configuration that the L-GW function is provided inside the HeNB has been described; however, it may be configured such that the L-GW, as an external node, is provided independently of the HeNB. For example, as shown in Fig. 6, it may be configured such that one L-GW 320 is provided for a plurality of HeNBs within a home (or a company). In such a configuration, in releasing the LIPA connection, the HeNB 200-1 requests the L-GW 320 to release the LIPA connection by using an interface between the HeNB 200-1 and the L-GW 320 instead of using Intra-node Signaling.

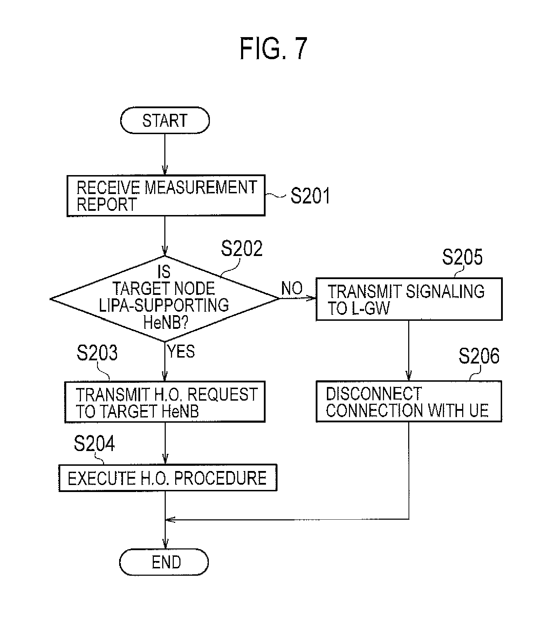

Fig. 7 is an operation flowchart in a configuration example shown in Fig. 6. In this case, differences from Fig. 5 will be mainly described.

As shown in Fig. 7, in step S201, the HeNB 200-1 decides to start the handover procedure of the UE 100 to the target base station (HeNB 200-2) on the basis of the measurement report received from the UE 100.

In step S202, the HeNB 200-1 confirms whether or not the HeNB 200-2 supports the LIPA on the basis of the cell ID of the HeNB 200-2 included in the measurement report and the neighboring base station information stored in the storage unit 230.

When the HeNB 200-2 supports the LIPA (step S202; YES), in step S203, the HeNB 200-1 transmits the handover request to the HeNB 200-2. Then, in step S204, the HeNB 200-1 transmits the handover command to the UE 100.

In contrast, when the HeNB 200-2 does not support the LIPA (step S202; NO), in step S205, the HeNB 200-1 requests the L-GW 320 to release the LIPA connection by using an interface between the HeNB 200-1 and the L-GW 320. The L-GW 320 releases the LIPA connection in response to the request from the HeNB 200-1. Then, in step S206, the HeNB 200-1 disconnects the connection between the HeNB 200-1 and the UE 100.

It is noted that, in such a configuration that the L-GW is shared by a plurality of HeNBs, the HeNB 200-1 may acquire the neighboring base station information from the L-GW 320.

As described above, it must be understood that the present invention includes various embodiments or the like that are not described herein.

### Industrial Applicability

As described above, a communication control method and a home base station according to the present invention are useful in a mobile communication system, with which it is possible to support a mobility of an LIPA connection.

## Claims

1. A communication control method in a home base station that supports LIPA (Local Internet Protocol Access) defined in the 3GPP (3rd Generation Partnership Project) standards, comprising:
a step of confirming whether or not a target base station supports the LIPA before a handover procedure from the home base station to the target base station is started for a user terminal having an LIPA connection; and
a step of transmitting a handover request to the target base station without releasing the LIPA connection when the target base station supports the LIPA.

2. A home base station that supports LIPA (Local Internet Protocol Access) defined in the 3GPP (3rd Generation Partnership Project) standards, being configured to:
confirm whether or not a target base station supports the LIPA before a handover procedure from the home base station to the target base station is started for a user terminal having an LIPA connection; and
transmit a handover request to the target base station without releasing the LIPA connection when the target base station supports the LIPA.
